(19) Europäisches Patentamt / European Patent Office / Office européen des brevets

(11) **EP 2 056 509 A2**

(12) **EUROPEAN PATENT APPLICATION**

(43) Date of publication:
06.05.2009 Bulletin 2009/19

(51) Int Cl.:
*H04L 1/00* (2006.01)

(21) Application number: 08167467.3

(22) Date of filing: 24.10.2008

| | |
|---|---|
| (84) Designated Contracting States:<br>AT BE BG CH CY CZ DE DK EE ES FI FR GB GR<br>HR HU IE IS IT LI LT LU LV MC MT NL NO PL PT<br>RO SE SI SK TR<br>Designated Extension States:<br>AL BA MK RS | (72) Inventors:<br>• **Zhang, Jinyun**<br>**Cambridge, MA 02139 (US)**<br>• **Peng, Fei**<br>**Sunnyvale, California 94086 (US)** |
| (30) Priority: 01.11.2007 US 979350<br>01.11.2007 US 979369 | (74) Representative: **Edlund, Fabian**<br>**Awapatent AB**<br>**P.O. Box 11394**<br>**404 28 Göteborg (SE)** |
| (71) Applicant: **Renesas Technology Corp.**<br>**Tokyo (JP)** | |

(54) **Performance-based link adaptation techniques**

(57) A multiple carrier wireless communications system includes a channel predictor, a performance predictor, and a link adapter. The channel predictor is configured to predict channel state information for a next packet based on channel state information for the current packet. The performance predictor includes an uncoded performance predictor configured to predict system performance at an input of a decoder based on a modulation type and the predicted channel state information for the next packet, and a decoder input-output performance mapper configured to determine a required coding rate based on a requested system performance and the predicted system performance at the input of the decoder. The link adapter includes a modulation and coding scheme (MCS) updater configured to identify a MCS based on the required coding rate.

*FIG. 4*

**Description**

Field of the Disclosure

The present invention relates generally to signal processing for wireless communications systems. More specifically, the present invention relates to techniques for adapting a wireless communications link, such as throughput adjustment techniques, for multi-carrier systems.

Description of the Related Art

Different link adaptation techniques for multiple-transmit and multiple-receive antenna (MIMO) multi-carrier systems have been proposed. For example, Lacage et al., "IEEE 802.11 rate adaptation: a practical approach," MSWiM'04, Venezia, Italy (October 2004); Braswell et al., "Modeling data rate agility in the IEEE 802.11 a WLAN protocol," OPNETWORK'01 (March 2001); and Haratcherev et al., "Hybrid rate control for IEEE 802.11," MobiWac'04, Philadelphia, PA (October 2004) relate to heuristic link adaptation techniques for MIMO multi-carrier systems. Further, Schenk et al., "Throughput of a MIMO-OFDM based WLAN systems," SCVT2004, Gent, Belgium (November 2004); Xia et al., "Adaptive MIMO-OFDM based on partial channel state information," IEEE Trans. Signal Processing, Vol. 25, No. 1, pp. 202- 213 (January 2004); Hermosilla et al. "Adaptive modulation and coding for turbo receivers in space-time BICM," IEEE WCNC 2006, pp. 1293-1298, Las Vegas, NV (April 2006); and Alamouti et al., "Adaptive trellis-coded multiple-phase-shift keying for Rayleigh fading channels," IEEE Transactions on Communications, Vol. 42, No. 6, pp. 2305-2314 (June 1994) relate to analytical link adaptation techniques for MIMO multi-carrier systems.

BACKGROUND

Multi-carrier transmission techniques are known to be capable of efficient frequency spectrum utilization. For example, orthogonal frequency division multiplexing (OFDM) is not only bandwidth-efficient but is also capable of avoiding interference caused by dispersive channels with properly designed guard intervals. Multi-carrier transmission techniques, such as OFDM, have been adopted in wireless standards such as IEEE 802.11, WiMax, and 3GPP. Further, MIMO transmission is known to be an effective technique for increasing the throughput of a wireless communication system and has been adopted in wireless standards, such as IEEE 802.11n.
Existing link adaptation techniques for MIMO multi-carrier systems can be classified into two general categories, heuristic and analytical. Heuristic link adaptation techniques can further be classified into retry-based and acknowledgment (ACK)-counting based techniques. In typical retry-based techniques, a transmitter can increase or decrease throughput according to a number of re-transmissions requested by a receiver. In typical ACK-counting based techniques, the transmitter can count a number of missing ACK's to estimate a rough frame-error rate (FER) and adapt the link accordingly. The signal strength indicator (SSI) (i.e., not the signal-to-noise ratio) can be combined with these heuristic link adaptation techniques and measured statistical information to improve performance. Despite apparent ease of implementation, these techniques typically suffer from high inefficiency and lack of rigorous theoretical support.
Typical analytical link adaptation techniques profile bit-error rate (BER) or packet-error rate (PER) against signal-to-noise ratio (SNR) for different modulation and/or coding schemes, using either analytical derivations or system simulations. For example, a set of SNR thresholds can be determined in a MIMO-OFDM channel to meet the general packet error rate (PER) requirement suggested by the WLAN standard (e.g., PER < $10^{-1}$). Also, simple expressions of uncoded BER as a function of SNR can be derived for a MIMO-OFDM channel, and used for adaptive modulation. Most existing analytical link adaptation techniques do not include channel coding or they assume independent coding for each spatial stream, which deviates from most practical communication systems. For practical communication systems, such as those adopted in the WiMax and IEEE 802.11n standards, one or more common channel encoders are employed for all spatial streams (e.g., on a per-user basis). Additionally, most existing analytical link adaptation techniques assume adaptation in the frequency-domain (i.e., choosing different modulation/coding schemes for different subcarriers), which is not yet practical, at least on a per-data-allocation-unit (e.g., burst) basis, for many wireless standards.
Further, existing analytical link adaptation techniques that consider common encoding/decoding, are typically very complex or rely on system simulations to profile BER/PER against SNR. Simulation based approaches can be problematic because they depend heavily on the *a priori* channel model. Thus, the set of SNR thresholds that are suitable for one channel model may not necessarily be suitable for others. In addition, for MIMO transmission with unequal modulations (i.e., different modulation schemes for different spatial streams), it is practically cumbersome to use SNR-threshold based approaches for MIMO channels with a common encoder because, in order to meet a target decoder output BER/PER requirement, there are theoretically up to an infinite number of possible combinations of SNR's for each spatial stream that yield an identical decoder output performance. Thus, to achieve near-optimal link adaptation, a large table of SNR's for different streams corresponding to a target performance would need to be stored in on-chip memory. This problem worsens for applications that require different decoder output performance. For example, video and audio applications sharing the same wireless connection can request BER's having differences that exceed several orders of magnitude.

BRIEF SUMMARY OF THE DISCLOSURE

In accordance with a first aspect of the present invention, a multiple carrier wireless communications system includes a channel predictor, a performance predictor, and a link adapter. The channel predictor is configured to predict channel state information for a next packet based on channel state information for the current packet. The performance predictor includes an uncoded performance predictor configured to predict system performance at an input of a decoder based on a modulation type and the predicted channel state information for the next packet, and a decoder input-output performance mapper configured to determine a required coding rate based on a requested system performance and the predicted system performance at the input of the decoder. The link adapter includes a modulation and coding scheme (MCS) updater configured to identify a MCS based on the required coding rate.

In accordance with a second aspect of the present invention, a method for adapting a multiple carrier wireless communications link includes: predicting channel state information for a next packet based on channel state information for a current packet; predicting system performance at an input of a decoder based on a modulation type and the predicted channel state information for the next packet; determining a required coding rate based on a requested system performance and the predicted system performance at the input of the decoder; and identifying a MCS based on the required coding rate.

BRIEF DESCRIPTION OF THE DRAWINGS

Objects and advantages of the present disclosure will be understood by reading the following detailed description in conjunction with the drawings in which:

FIGS. 1A-1C illustrate an exemplary wireless communications system and transmitter and receiver of the wireless communications system, respectively;
FIG. 2 illustrates a wireless communications system including a transmitter physical layer (PHY), receiver PHY, and a link adaptation system in accordance with an exemplary embodiment of the present disclosure;
FIGS. 3A and 3B illustrate a channel predictor and a linear channel prediction algorithm, respectively, in accordance with an exemplary embodiment of the present disclosure;
FIG. 4 illustrates a PHY performance predictor in accordance with an exemplary embodiment of the present disclosure;
FIG. 5A illustrates an uncoded performance predictor in accordance with an exemplary embodiment of the present disclosure;
FIG. 5B illustrates an exemplary process of demodulating a MIMO multi-carrier signal;
FIG. 5C illustrates an exponential approximation of a composite function of the Gaussian error integral and the square-root;
FIG. 6A illustrates a decoder input-output performance profile for a (1/2, 7) convolutional code;
FIG. 6B illustrates exemplary configurations for a decoder input-output performance mapper operating in first and second modes with respect to a log-linear approximation approach in accordance with exemplary embodiments of the present disclosure;
FIG. 6C illustrates exemplary configurations for a decoder input-output performance mapper operating in first and second modes with respect to a lookup table approach in accordance with exemplary embodiments of the present disclosure;
FIG. 7 illustrates a link adapter in accordance with an exemplary embodiment of the present disclosure;
FIG. 8 illustrates a throughput controller in accordance with an exemplary embodiment of the present disclosure;
FIG. 9A illustrates exemplary performance plots of an industry standard (1/2, 7) convolutional coded MIMO multi-carrier system with one and two spatial streams, demonstrating a simplified MCS search approach in accordance with an exemplary embodiment of the present disclosure;
FIG. 9B illustrates a MCS table for a maximum of two spatial streams, demonstrating the simplified MCS search approach in accordance with an exemplary embodiment of the present disclosure; and
FIG. 9C illustrates a state transition diagram for entries of the simplified MCS table illustrated in FIG. 9B with two spatial streams, demonstrating a fast MCS search approach in accordance with an exemplary embodiment of the present disclosure.

DETAILED DESCRIPTION

Overview

Robust and relatively simple performance-based link adaptation techniques for MIMO-OFDM channels having a common set of channel encoders (on a per data-allocation-unit (e.g., burst) basis) are described herein. These link adaptation techniques account for the relationship between the wireless channel, MCS, and decoder output performance and can dynamically update the MCS according to a performance requirement requested by an application. Although exemplary embodiments of the link adaptation techniques of the present disclosure are described for OFDM multi-carrier systems, one of skill in the art will understand that the link adaptation techniques of the present disclosure need not be limited to OFDM multi-carrier systems, and are suitable for all multi-carrier systems. Further, because MIMO transmission is a generalization of single-transmit and multiple-receive (SIMO), multiple-transmit and single-receive (MISO), or single-transmit and single-receive (SISO) transmission techniques, one of skill in the art will understand that the link adaptation techniques of the present disclosure need not be limited to MIMO transmission, and can be easily extended to SIMO, MISO, and SISO transmission techniques.

Note that independent, simultaneously-transmitted data streams enabled by MIMO systems are referred to herein as "spatial streams." Additionally, exemplary embodiments of the link adaptation techniques of the present disclosure are described herein for MIMO channels with and without space-time frequency coding.

Modem wireless communications systems, such as Wi-Fi (802.11), are typically packet based. A packet usually contains preambles followed by data. A receiver can use preambles for carrier-frequency offset estimation, synchronization and channel estimation, etc., for proper reception of transmitted data. Packets for wireless communications systems, such as Wi-Fi, are designed such that the wireless channel undergoes very little change over the duration of a packet. In this way, channel state information (CSI) estimated by the preambles can be used in demodulation of data and, in the case of a bursty transmission, channel variations for consecutive packets are small enough to permit channel prediction. Thus, exemplary embodiments of the link adaptation techniques of the present disclosure employ such packet design.

Modem communications systems typically employ error control coding to protect information from channel corruption due to noise and interference. In most recent standards, convolutional coding is adopted. In addition, a cyclic-redundancy-check (CRC) code is often implemented before a channel encoder to enable frame integrity check at a receiver. While the (1/2, 7) convolutional code is used herein to describe exemplary embodiments, one of skill in the art will understand that the link adaptation techniques of the present disclosure are not limited to this specific code.

A detailed description of performance-based link adaptation techniques is presented below, in accordance with one or more embodiments of the present disclosure. The explanation will be by way of exemplary embodiments to which the present invention is not limited.

High-Level Wireless Communications Systems

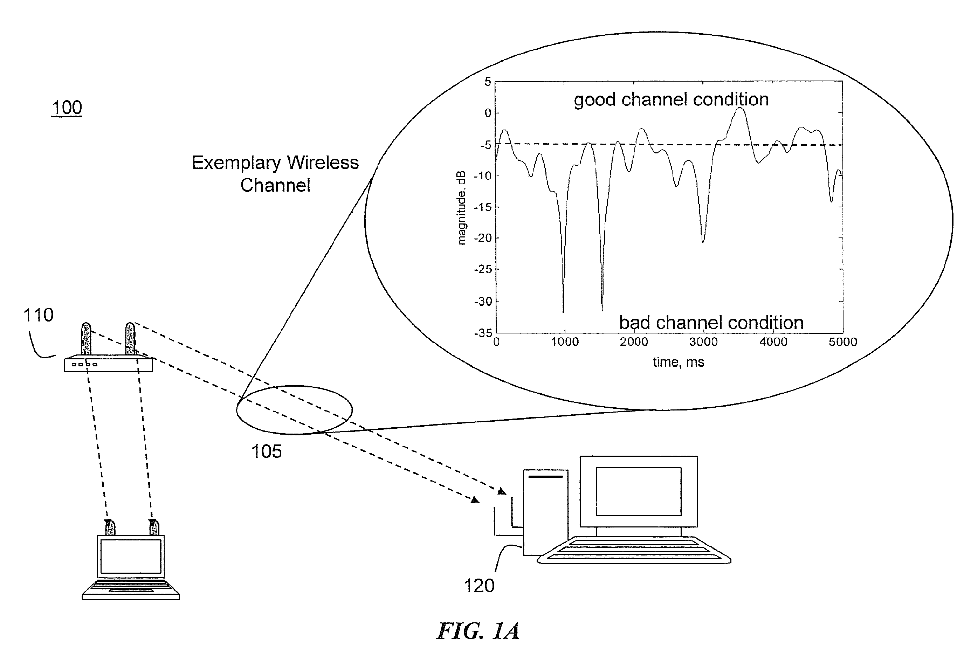

FIGS. 1A-1C illustrate an exemplary wireless communications system and transmitter and receiver of the wireless communications system, respectively. FIG. 1A illustrates an exemplary MIMO multi-carrier system 100 that might be employed in a typical home wireless local area network (LAN) environment, for example. MIMO multi-carrier system 100 includes a transmitter 110, a receiver 120, and an exemplary wireless, multi-path fading channel 105 that varies in time. As shown in FIG. 1A, during good channel conditions, the channel 105 may permit high throughput for reliable communications, but during bad channel conditions, the channel 105 may permit only limited throughput for reliable communications. In this example, employing a single, fixed-rate transmission may not fully utilize the channel 105 during good channel conditions and result in performance losses during bad channel conditions. Thus, link adaptation should be employed to fully utilize the channel 105 under all conditions.

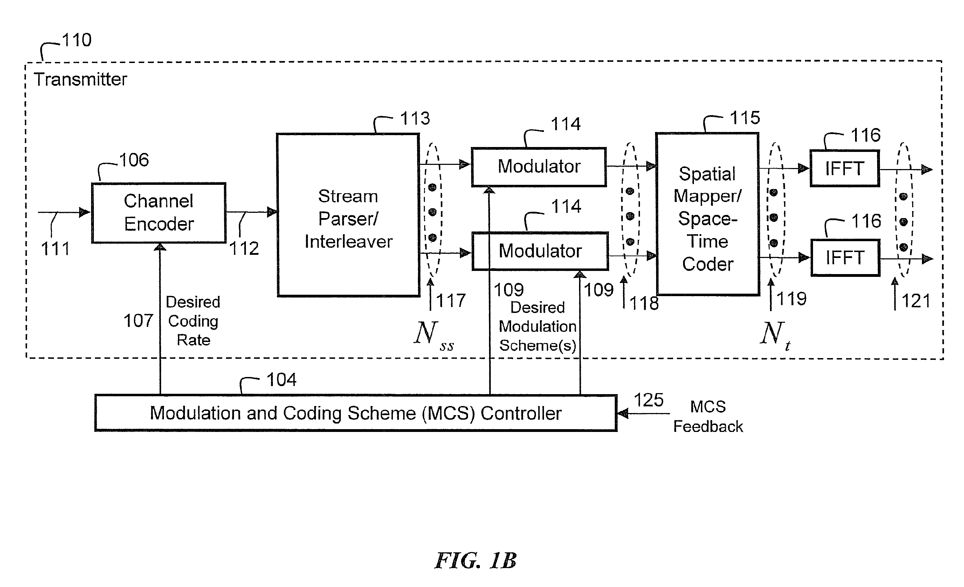

FIG. 1B shows a portion of the MIMO multi-carrier transmitter 110 that includes a MCS controller 104, a channel encoder 106, a stream parser/interleaver 113, modulators 114, a spatial mapper/space-time coder 115, and inverse fast Fourier transform (IFFT) calculators 116. As shown in FIG. 1B, data from medium access control (MAC) layer 111 can be encoded by the channel encoder 106, and then the encoded output data 112 can be parsed into $N_{ss}$ data spatial streams 117 via stream parser/interleaver 113. The $N_{ss}$ spatial streams 117 can then be modulated by modulators 114. The spatial mapper/space-time coder 115 can spatially map modulated data streams 118 into $N_t$ transmit chains 119. In this case, space-time coding is typically performed before spatial mapping, where spatial mapping can include any form of spreading, pre-coding, beam-forming or linear-dispersive coding. IFFT calculators 116 can then efficiently implement multi-carrier modulation of the $N_t$ transmit chains 119. After a cyclic prefix (CP) is inserted, signals 121 can be up-converted and transmitted through antennas to the wireless channel 105.

When the MIMO multi-carrier system 100 employs link adaptation, the channel encoder 106 and the modulators 114 can be controlled by the MCS controller 104, which can read MCS feedback 125 from the receiver 120. The MCS controller 104 can instruct the channel encoder 106 to encode the MAC data 111 with a desired coding rate 107 via puncturing, and can instruct the modulators 114 to map bit-sequences of the $N_{ss}$ spatial streams 117 to symbol sequences with a desired modulation scheme(s) 109.

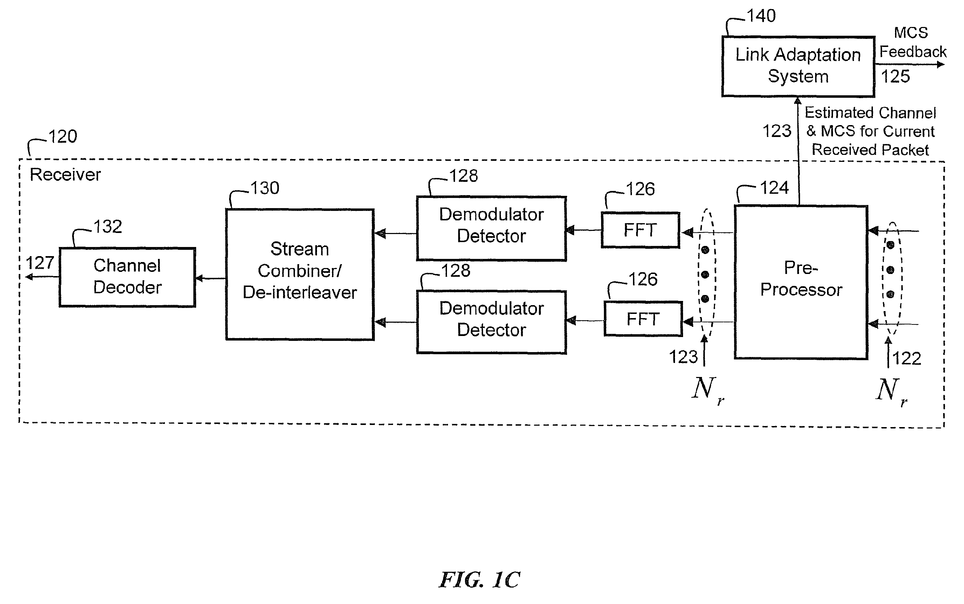

FIG. 1C shows a portion of the MIMO multi-carrier receiver 120 that includes a pre-processor 124, fast Fourier transform (FFT) calculators 126, demodulator detectors 128, a stream combiner/de-interleaver 130, and a channel decoder 132. As shown in FIG. 1C, after down-conversion, the pre-processor 124 can receive and process preambles of $N_r$ received signals 122 for carrier alignment, synchronization, and channel estimation, and can extract information about the arriving packets, such as the MCS and packet length. After pre-processing, the $N_r$ processed signals 123 can be demodulated, de-mapped and decoded using the FFT calculators 126, demodulator detectors 128, stream combiner/de-interleaver 130, and channel decoder 132. The decoder output signal 127 can then be sent to the MAC layer of the MIMO multi-carrier system 100.

When the MIMO multi-carrier system 100 employs link adaptation, a link adaptation system 140 can use an estimated channel and MCS 123 generated by the pre-processor 124 for a current packet to adaptively select an MCS that maximizes throughput while satisfying a performance requirement for a next packet. The link adaptation system 140 can then send the selected MCS to the transmitter 110 as MCS feedback 125.

Exemplary Performance-Based Link Adaptation Systems

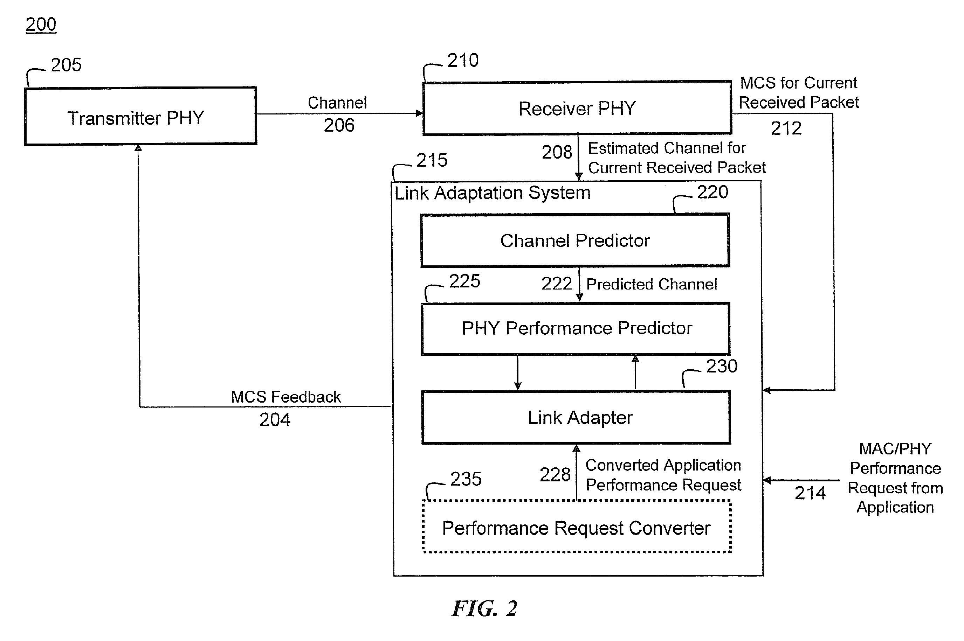

FIG. 2 illustrates a wireless communications system 200 including a transmitter PHY 205, receiver PHY 210, and a link adaptation system 215, in accordance with an exemplary embodiment of the present disclosure. As shown in FIG. 2, the transmitter PHY 205 can transmit signals over a MIMO channel 206 to the receiver PHY 210. The receiver PHY 210 can send to the link adaptation system 215 estimated channel state information 208 and a MCS 212 for a current received packet. The link adaptation system 215, in turn, can send MCS feedback 204 to the transmitter PHY 205 in response to a MAC/PHY performance request 214 from an application.

The link adaptation system 215 includes a channel predictor 220, a PHY performance predictor 225, a link adapter 230, and an optional performance request converter 235. In accordance with an aspect of the present disclosure, the link adaptation system 215 can be implemented in conjunction with a computer-based system, including hardware, software, firmware, or combinations thereof. The channel predictor 220 can be configured to predict channel state information 222 for a next packet based on the estimated channel state information 208 for the current packet. The PHY performance predictor 225, in turn, can predict a performance of the entire physical layer at the decoder output, given the predicted channel state information 222, as well as MCS input from the link adapter 230.

The link adapter 230 can work together with the PHY performance predictor 225 to select a desired MCS 204 for feedback to the transmitter PHY 210 based on the MCS 212 for the current received packet, the performance predicted by the PHY performance predictor, and the application performance request 214. Optionally, the link adaptation system 215 includes the performance request converter 235, which can convert a format of the application performance request 214 to a format of a converted application performance request 228 to ensure compatibility with the link adapter 230.

The components of the exemplary link adaptation system 200 are discussed in more detail as follows.

*Exemplary Representation of the MIMO Channel*

In general, a MIMO channel, such as MIMO channel 206, carried over a subcarrier may be expressed (omitting subcarrier indices) as shown in Equation (1):

$$\underline{R} = \boldsymbol{H}\,\underline{X} + \underline{W} \qquad\qquad (1)$$

where $\underline{R}$, $\underline{X}$ and $\underline{W}$ are the received, transmitted and noise vectors, respectively, and $\boldsymbol{H}$ is a channel matrix. The length of the vectors $\underline{R}$ and $\underline{W}$ depends on the number of receive antennas, and the length of the vector $\underline{X}$ depends on the number of data streams of the MIMO channel. Embodiments of the link adaptation techniques of the present disclosure are based upon the MIMO channel mathematical model of Equation (1).

*Exemplary Performance Requests*

In some embodiments, the application may specify as the performance request 214 the MAC FER or the decoder-output coded BER. In most modem communications systems, especially in recent wireless standards, a CRC code is implemented in the MAC layer to check the integrity of a received data frame. If a CRC decoder reports an error, then a retransmission may be requested. The MAC FER ($P_F$) represents the probability the CRC decoder finds a received data frame to be in error. The decoder-output coded BER represents the probability of a bit error in a decoded codeword in the PHY. Thus, $P_F = P_{cw} (1 - P_{ud})$, where $P_{ud}$ is the probability that the codeword error is undetected by the CRC decoder and $P_{cw}$ is the actual codeword error probability, which depends on the code and the decoding method. The quantity ($1 - P_{ud}$) can be approximated by the error pattern coverage ($\lambda$) of the CRC code. For instance, $\lambda > (1 - 10^{-8}) \cong 1$ for an exemplary CRC-32 code. Thus, for practical applications, $P_F \cong P_{cw}$, which can be approximated by a unique function of the coded BER ($P_b$).

The mapping between $P_{cw}$ and $P_b$ can be analyzed *a priori* for the code and tabulated in on-chip memory or approximated by a certain function. The mapping expression depends on the decoding methods and the properties of the code. While general bounds for linear block coding on $P_{cw}$ in terms of $P_b$ have been defined, they could be quite loose for a particular coding scheme. One way to obtain a more precise mapping between $P_{cw}$ and $P_b$ is to simulate the code over an additive white Gaussian noise (AWGN) channel and plot $P_{cw}$ vs. $P_b$. Analytically, the mapping can be determined by first expressing $P_{cw}$ and $P_b$ in terms of channel transition probability or signal-to-noise ratio (SNR) and then plotting $P_{cw}$ vs. $P_b$. An example of such a mapping for a (1/2, 7) convolutional code is shown in Table 1.

**Table 1. Exemplary Mapping of $P_b$ and $P_F$ for (1/2, 7) Convolutional Code**

| $P_b$ | $10^{-1}$ | $10^{-2}$ | $10^{-3}$ | $10^{-4}$ | $10^{-5}$ |
|---|---|---|---|---|---|
| $P_F$ | 1 | 0.04 | 0.065 | 0.007 | 0.001 |

Embodiments of the link adaptation techniques of the present disclosure focus on the coded BER ($P_b$) as the application performance request 214 due to simplicity in analysis and implementation. However, if FER is requested by the application, then the performance request converter 235 can be employed to convert the FER request to a coded BER request prior to being input to the link adapter 230. Thus, the exemplary methods and systems for BER-based application performance requests 214 described herein are identical to those with FER requests.

*Exemplary Channel Predictor*

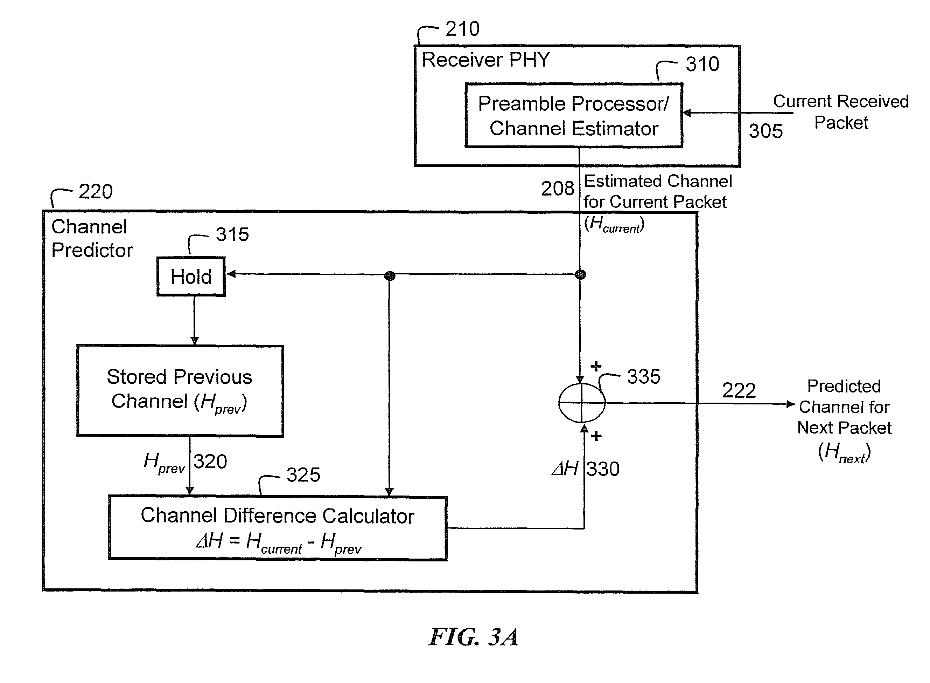

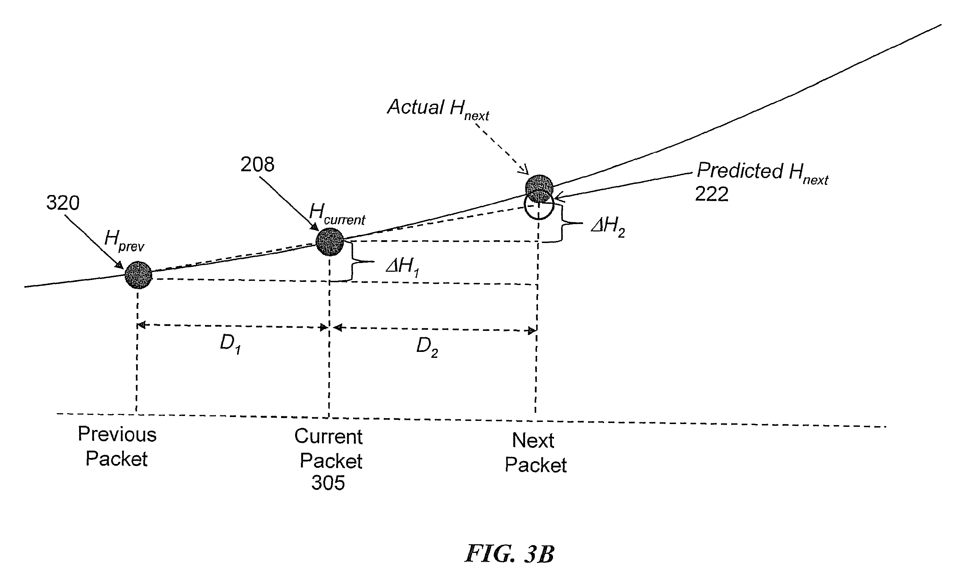

The link adaptation techniques of the present disclosure are based on selecting an appropriate MCS for the next arriving packet. Thus, to accurately predict system performance with the selected MCS, the channel predictor 220 can be configured to predict channel state information (e.g., channel gains) for the next arriving packet. For an accurate prediction, the channel predictor 220 can assume that the next packet arrives within a coherence time of the current packet. Otherwise, the channel state information for the next packet can become uncorrelated from the channel state information for the current packet, and the channel predictor 220 will be unable to obtain any information. In such a case, the transmitter PHY 205 might start conservatively, by transmitting a packet with a MCS of low-to-medium throughput, or use other greedy or conservative starting approaches. FIGS. 3A and 3B illustrate a channel predictor 220 and a linear channel prediction algorithm, respectively, in accordance with exemplary embodiments of the present disclosure.

As shown in FIG. 3A, the channel predictor 220 can predict the channel state information 222 for the next received packet based on the estimated channel 208 for the current packet. For example, a preamble processor/channel estimator 310 of the receiver PHY 210 can process the preamble portion of a current received packet 305 to estimate the current channel $H_{current}$ 208. Next, a channel difference calculator 325 of the channel predictor 220 can subtract a previous channel $H_{prev}$ 320 from the estimated current channel $H_{current}$ 208 to determine a channel increment ($\Delta H$) 330. The channel increment 330 can then be used to predict the channel for the next received packet $H_{next}$ 222. As shown in FIG. 3A, the current channel $H_{current}$ 208 is stored in a memory 315 to be used as the previous channel $H_{prev}$ 320 for the next arriving packet.

As shown in FIG. 3B, the channel predictor 220 can use a linear approximation technique to predict the channel state information 222 for the next received packet based on the estimated channel 208 for the current packet. For a typical slow fading wireless channel with low mobility, the coherence time of the channel is at least long enough to span over several packet durations. Thus, in a bursty transmission, the channel variation for three consecutive packets may be approximated as a linear function of time. As shown in FIG. 3B, this linear approximation of the channel variation allows the following simplified prediction of the channel for the next packet $H_{next}$ 222 from the current channel estimate $H_{current}$ 208:

$$H_{next} \approx H_{current} + \Delta H_2 = H_{current} + \frac{D_2}{D_1} \Delta H_1 \qquad (2)$$

where $\Delta H_2$ gives the difference between $\boldsymbol{H}_{next}$ 222 and $\boldsymbol{H}_{current}$ 208, and $D_1$ is a time separation between the current packet 305 and the previous packet and $D_2$ is a time separation between the current packet 305 and the next packet. For example, $D_1$ and $D_2$ can be estimated using packet length parameters, such as the number of OFDM symbols contained in the packet. Similarly, $\Delta H_1$ gives the difference between $\boldsymbol{H}_{current}$ 208 and $\boldsymbol{H}_{prev}$ 320 as follows:

$$\Delta \boldsymbol{H}_1 = \boldsymbol{H}_{current} - \boldsymbol{H}_{prev} \qquad (3)$$

Further, during a bursty transmission, since the channel condition for two consecutive packets undergoes very little change, the MCS difference for two consecutive packets does not cause substantial change in packet length. Thus,

$$D_1 \approx D_2 \qquad (4)$$

and

$$\Delta \boldsymbol{H}_1 \approx \Delta \boldsymbol{H}_2 = \Delta \boldsymbol{H}, \qquad (5)$$

further simplifying the complexity of the channel predictor 220.

An even simpler implementation of the channel predictor 220 considers the next channel to be approximately identical to the current channel, as follows:

$$\boldsymbol{H}_{next} \approx \boldsymbol{H}_{current} \qquad (6)$$

In this case, the current channel $\boldsymbol{H}_{current}$ 208 can be used for link adaptation, and no hardware for channel prediction is required. The channel noise variance may be estimated by measuring the power of background noise during an idle period.

*Exemplary PHY Performance Predictor*

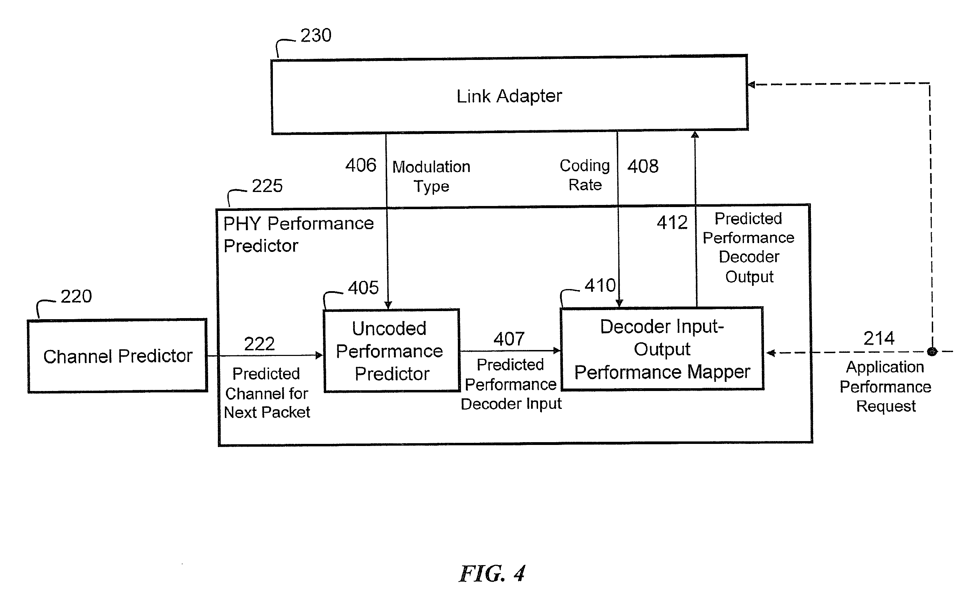

FIG. 4 illustrates the PHY performance predictor 225, in accordance with an exemplary embodiment of the present disclosure. As shown in FIG. 4, the PHY performance predictor 225 includes an uncoded performance predictor 405 and a decoder input-output performance mapper 410.

Uncoded Performance Predictor

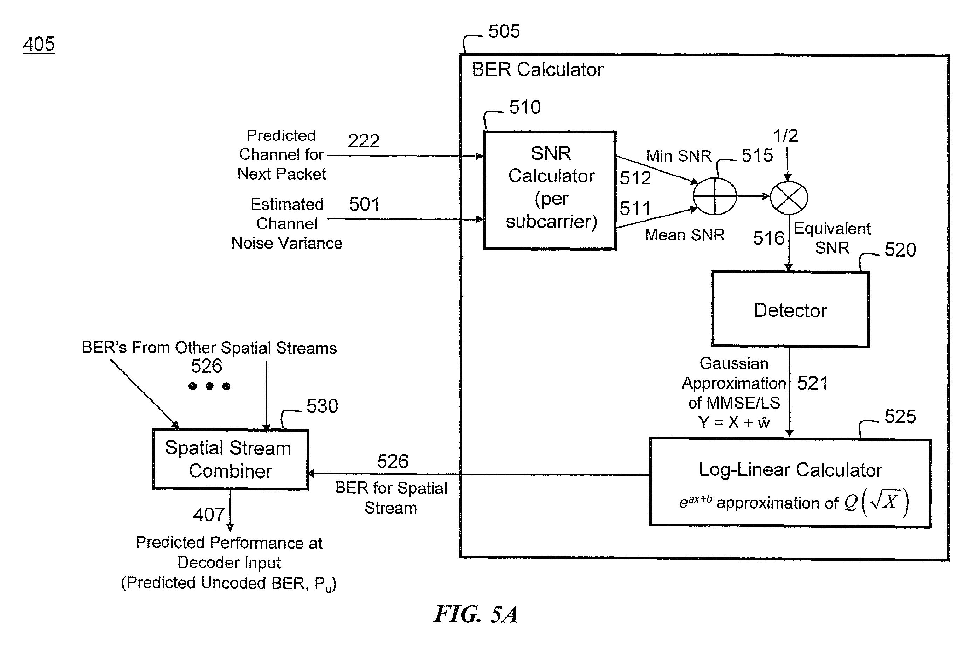

The uncoded performance predictor 405 can estimate a predicted performance at the decoder input 407 (e.g., uncoded BER) given the predicted channel 222 for the next packet, a modulation type 406 selected by the link adapter 230, and the SNR, as will be described herein. FIG. 5A illustrates the uncoded performance predictor 405, in accordance with an exemplary embodiment of the present disclosure. In this embodiment, the uncoded performance predictor 405 includes a BER calculator 505 and a spatial stream combiner 530.
The BER calculator 505 includes a SNR calculator 510, combiner 515, detector 520, and log-linear calculator 525. For each spatial stream, the SNR calculator 510 can calculate a SNR for each subcarrier of the spatial stream based on the predicted channel 222 and an estimated channel noise variance 501. The combiner 515 can combine a mean 511 of the SNRs for each subcarrier and a minimum 512 of the SNRs for each subcarrier to estimate an equivalent SNR 516. The detector 520 can detect modulation symbols from each of the subcarriers of the spatial stream using Gaussian approximation of combined noise and interference. For example, the signal-to-noise-plus-interference ratio can be estimated according to the equation $Y = X + \hat{w}$, where $X$ has unit average power and $\hat{w}$ contains both additive channel noise and residual interference from a minimum mean squared error (MMSE) or least square (LS) calculation. Then, the log-linear calculator 525 can calculate an exponential approximation ($e^{ax+b}$) of a Gaussian error integral Q-function based on the calculated equivalent SNR 516, scaled by channel gain, to determine a BER 526 for the spatial stream.

The spatial stream combiner 530 can then combine the BERs 526 from different spatial streams to determine the predicted performance at the decoder input 407 (e.g., the predicted uncoded BER ($P_u$) for the embodiment shown in FIG. 5A). In one embodiment, the spatial stream combiner 530 can sum bit-error probabilities for each of the spatial streams with weighted bit-error probabilities for each of the spatial streams, and divide the sum by a cumulative number of bits per symbol for the spatial streams. For example, the spatial stream combiner 530 can weight each spatial stream by a number of bits per symbol of the corresponding spatial stream. In another embodiment, different data carriers in a multiple carrier wireless communications system may support different sets of modulation schemes, in which case an average predicted uncoded BER can be computed at the decoder input by combining the predicted uncoded BER of each of the data carriers.

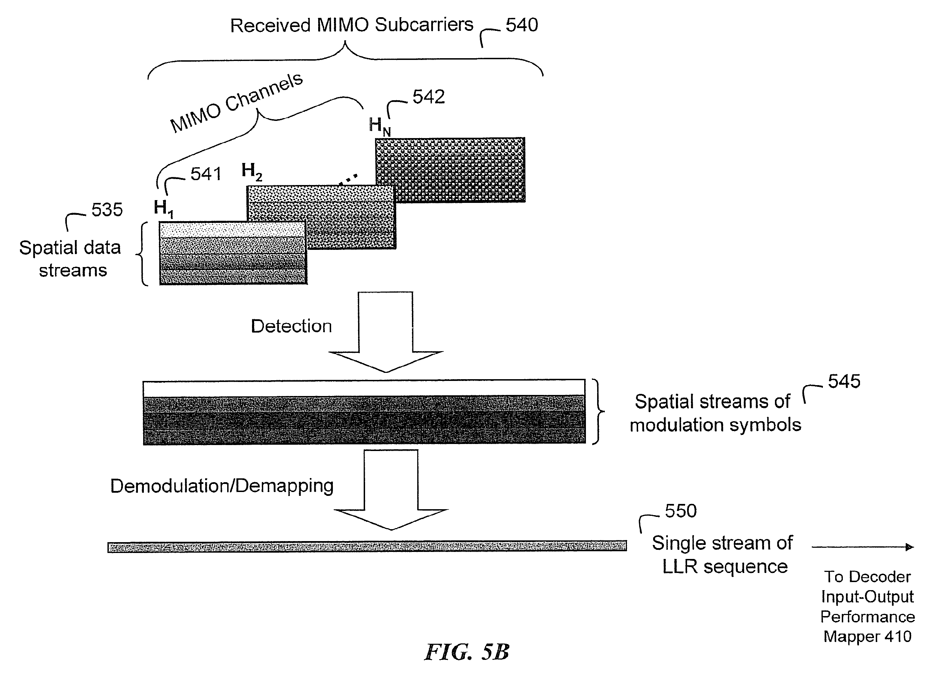

FIG. 5B illustrates an exemplary process of demodulating a MIMO multi-carrier signal. When the communications system 200 employs MIMO multi-carrier transmission, each spatial stream of a plurality of spatial streams 335 includes a plurality of subcarriers 540. Each of the subcarriers 540 carries a MIMO channel (e.g., $H_1$, $H_2$, ...$H_N$), and the MIMO channel is different for different subcarriers. For example, in FIG. 5B, the channel $H_1$ 541 could have a better channel condition than the channel $H_N$ 542, as illustrated by the different degrees of texture applied to the respective channels. Each of the subcarriers 540 contains $\underline{R}$, as given in Equation (1), where the vector $\underline{R}$ is different for the different subcarriers 540. The detector 520 can apply detection, such as MMSE or LS detection, to each vector $\underline{R}$ for each of the subcarriers 540. Then, estimated modulation symbols 545 from all of the subcarriers 540 can be combined together if they belong to the same spatial stream. Each resulting spatial stream 550 then has a common modulation type, and a BER 526 for the spatial stream 550 can be computed using known BER expressions of commonly used digital modulation schemes.

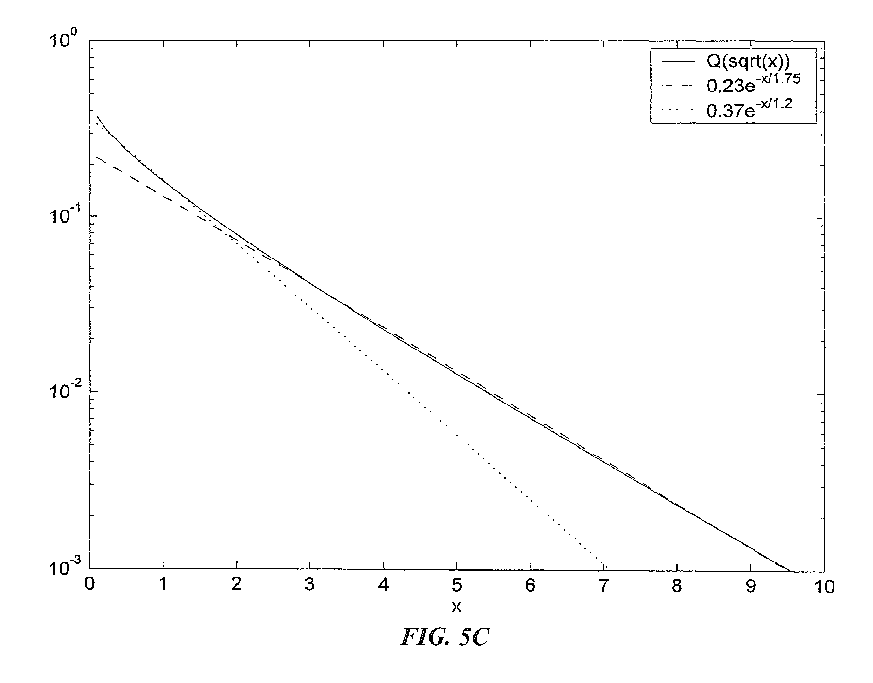

A disadvantage of computing BER directly using known BER expressions of commonly used digital modulation schemes is they involve a Gaussian error integral $Q$-function (or $Q\left(\sqrt{x}\right)$ to be exact) whose expression is not in closed-form. To enable fast hardware computation, a log-linear approximation of $Q\left(\sqrt{x}\right)$ can be employed. For example, FIG. 5C illustrates an exponential approximation of a composite function of the Gaussian error integral and the square-root. For most applications, it is sufficient to only consider the range of uncoded BER between $10^{-3}$ and $10^{-1}$. For this range, as shown in FIG. 5C, a good approximation is as follows:

$$Q\left(\sqrt{x}\right) \approx 0.23e^{-x/1.75} \qquad (7)$$

Because channel gains for different subcarriers are different, the exact expression for computing a BER $P_k$ for a spatial stream combined from different subcarriers, such as BER 526, shown in FIG. 5A, is as follows:

$$P_k = \frac{1}{N_d} \sum_{m \in I_d} p_m^k \qquad (8)$$

where $p_m^k$ is the BER for the $m$-th subcarrier and the $k$-th spatial stream, $I_d$ is the index set of data subcarriers, and $N_d = |Id|$.

The direct computation of Equation (8) may be expensive to implement in hardware because $N_d$ is often large (i.e., approximately > 40) and the $p_m^k$ expressions involve exponential functions, as shown in Equation (7). To reduce the number of exponential functions involved in the computation, an equivalent SNR for $P_k$ can be estimated.

Since the channel 206 may be quite frequency-selective, the SNRs for different subcarriers may vary across a large range. Because subcarriers with very good channel conditions can have BERs that are many orders of magnitude lower than BERs for other subcarriers, their contribution to $P_k$ may be neglected. More specifically, a mean SNR, such as mean SNR 511, shown in FIG. 5A, can be denoted as follows:

$$\overline{\rho_k^m} = \frac{1}{N_d} \sum_{m \in I_d} \rho_k^m \qquad (9)$$

Then, by only averaging those subcarriers whose SNR is below the mean SNR, an equivalent SNR $\rho_k$, such as equivalent SNR 516, shown in FIG. 5A, can be estimated as follows:

$$\rho_k \approx \frac{1}{\tilde{N}} \sum_{m:\rho_m^k < \overline{\rho_m^k}} \rho_m^k \qquad (10)$$

where $\tilde{N}$ is the number of subcarriers whose SNR is below $\overline{\rho_k^m}$. By employing linear approximation, Equation (10) can be further simplified as follows:

$$\rho_k \approx \frac{1}{2}\left(\min\left(\rho_m^k\right) + \overline{\rho_m^k}\right) \qquad (11)$$

The expression to compute $P_k$ from $\rho_k$ depends on the detection method for detecting $\underline{X}$ from $\underline{R}$ in Equation (1). For example, if MMSE detection is employed with Gaussian approximation of the MMSE output, then, for the $k$-th spatial stream, the MMSE output, such as MMSE/LS output 521, shown in FIG. 5A, can be modeled as follows:

$$Y_k = G_{kk} \bullet X_k + V_k \qquad (12)$$

where $G$ is the MMSE equalizer matrix and $V_k$ is considered to be zero-mean complex Gaussian noise containing noise plus interference. The variance of $V_k$ can be computed using known Wiener techniques, with the consideration of channel estimation errors.

Once the BER for each spatial stream is obtained, the decoder input BER $P_u$ can be obtained as follows:

$$P_u = \frac{1}{\sum_{k=1}^{N_{ss}} b_k} \sum_{k=1}^{N_{ss}} P_k b_k \qquad (13)$$

where $b_k$ is the number of bits per symbol for the $k$-th spatial stream, defined by the modulation scheme for that stream.

Decoder Input-Output Performance Mapper

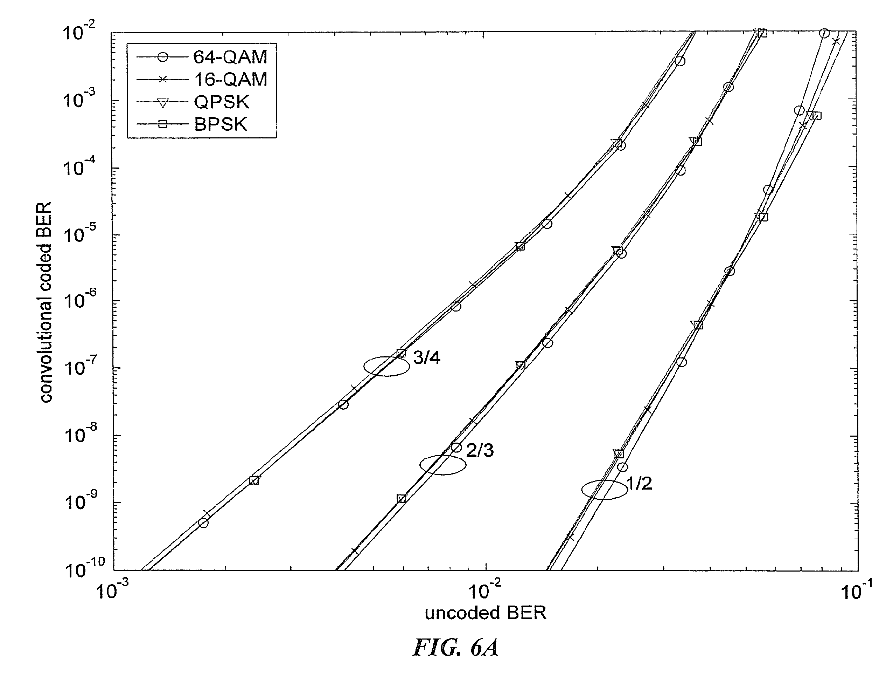

The decoder input-output performance mapper 410 can be implemented based on the observation that for commonly used modulation types, such as BPSK, QPSK, 16-QAM and 64-QAM, decoder output BER as a function of decoder input BER tends to group together for the same coding rate when Gray mapping is employed. This phenomenon is illustrated in FIG. 6A. FIG. 6A illustrates a decoder input-output performance profile for the industry standard (1/2, 7) convolutional code, where the plots are generated using tight upper bounds. Note that the plots shown in FIG. 6A will vary for different codes. For the same coding rate, the difference due to different modulation types is negligible compared with the performance difference due to different coding rates; therefore, the performance for different modulation types of a common coding rate can be approximated by the same function.

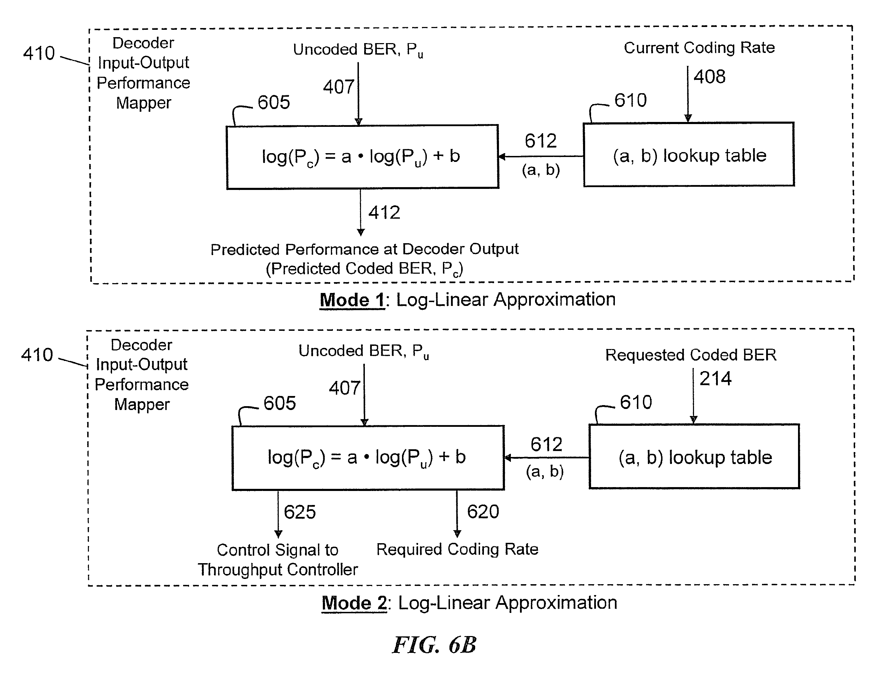

As shown in FIG. 6B, the performance mapper 410 can have two operating modes, which are referred to herein as first and second modes or modes 1 and 2, respectively. In both modes, the performance mapper 410 can receive the predicted performance at the decoder input 407 (e.g., predicted uncoded BER, $P_u$) as an input. In mode 1, the performance mapper 410 can receive the coding rate 408 as another input and output the predicted performance at the decoder output 412 (e.g., predicted coded BER, $P_c$) that corresponds to the predicted performance at the decoder input 407 (e.g., predicted uncoded BER, $P_u$).

In mode 2, the performance mapper 410 can receive the application performance request 214 or the converted application performance request 228 (e.g., the requested coded BER from the application) as another input and output a required coding rate 620. In mode 2, the performance mapper 410 can output a required coding rate 620 that is an invalid coding rate to indicate that no coding rate is supportable. Further, as will be described herein, the performance mapper 410 can also output a control signal 625 to a throughput controller to handle the situation when the required coding rate 620 is a valid coding rate but is not the highest coding rate that can be supported for the modulation type 406.

*Log-Linear Approximation Method*

To facilitate hardware implementation in either mode 1 or mode 2, in one embodiment, a log-linear approximation of the decoder output BER ($P_c$) as a function of the decoder input BER ($P_u$) can be used. For example, if $L_{out} = \log(P_c)$, where log denotes natural log, and $L_{in} = \log(P_u)$, then

$$L_{out} = a \bullet L_{in} + b \qquad (14)$$

For various coding rates (e.g., 1/2, 2/3, 3/4 and 4/5), Table 2 lists possible sets of ($a, b$) for the (1/2, 7) convolutional code. Persons of skill in the art will understand that the log-linear approximation method can be implemented for other codes and/or coding rates.

**Table 2. Exemplary List of ($a, b$) for (1/2, 7) Convolutional Code**

| $R$ | 1/2 | 2/3 | 3/4 | 4/5 |
|-----|-----|-----|-----|-----|
| $a$ | 9 | 6.4 | 5 | 4 |
| $b$ | 15 | 12 | 10 | 8.5 |

FIG. 6B illustrates exemplary configurations for the decoder input-output performance mapper 410 operating in the first and second modes with respect to the log-linear approximation approach, in accordance with exemplary embodiments of the present disclosure. In mode 1, the performance mapper 410 can include an ($a, b$) lookup table 610 that can be used by the performance mapper 410 to generate a set of ($a, b$) 612 for a current coding rate 408. In this way, log-linear approximation calculator 605 can determine the predicted performance at the decoder output 412 (e.g., coded BER, $P_c$) for arbitrary values of predicted performance at the decoder input 407 (e.g., uncoded BER, $P_u$) using the set of ($a, b$) 612 that corresponds to the current coding rate 408.

In mode 2, the performance mapper 410 can include the ($a, b$) lookup table 610 that can be used by the performance mapper 410 to generate the set of ($a, b$) 612 based on the application performance request 214 (e.g., requested coded BER). In this way, the log-linear approximation calculator 605 can determine a required coding rate 620 for arbitrary values of predicted performance at the decoder input 407 (e.g., uncoded BER, $P_u$) using the set of ($a, b$) 612 that corresponds to the application performance request 214. Optionally, the performance mapper 410 can also output the control signal 625 for use by a throughput controller, which is described herein in further detail.

*Lookup Table Based Method*

Alternatively, in another embodiment based on the phenomenon illustrated in FIG. 6A, a lookup table may be constructed to store $L_{out}$ for a given $L_{in}$ for different coding rates. Table 3 illustrates example entries, which are the exponents of e, for various coding rates (e.g., 1/2, 2/3, and 3/4) for the (1/2, 7) convolutional code. The predicted performance at the decoder input ($L_{in}$) can be quantized to one of the available levels. However, in practice, more quantization levels may need to be implemented. Persons of skill in the art will understand that the lookup table based method can be implemented for other codes and/or coding rates, as well as for other performance requirement formats (e.g., FER).

**Table 3. Exemplary Uncoded BER Lookup Table for $L_{in}$ for (1/2, 7) Convolutional Code**

| $L_{out}$ | R=1/2 | R=2/3 | R=3/4 |
|---|---|---|---|
| -3 | -1.55 | -1.36 | -1.1 |
| -4 | -1.7 | -1.47 | -1.18 |
| -5 | -1.87 | -1.6 | -1.28 |
| -6 | -2.06 | -1.74 | -1.38 |
| -7 | -2.27 | -1.9 | -1.49 |
| -8 | -2.48 | -2.06 | -1.6 |
| -9 | -2.69 | -2.22 | -1.71 |
| -10 | -2.91 | -2.38 | -1.82 |

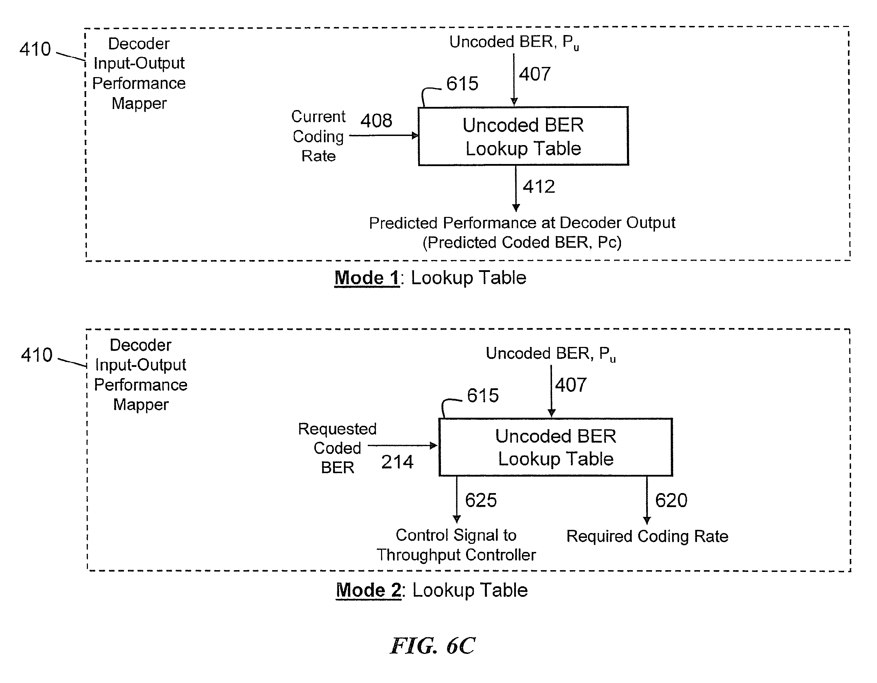

FIG. 6C illustrates exemplary configurations for the decoder input-output performance mapper 410 operating in the first and second modes with respect to the lookup table approach, in accordance with exemplary embodiments of the present disclosure. In mode 1, the performance mapper 410 can include an uncoded BER lookup table 610 that can be used by the performance mapper 410 to determine the predicted performance at the decoder output 412 (e.g., coded BER, $P_c$) for arbitrary values of predicted performance at the decoder input 407 (e.g., uncoded BER, $P_u$) based on the current coding rate 408.

In mode 2, the performance mapper 410 can include the uncoded BER lookup table 615 that can be used by the performance mapper 410 to generate the required coding rate 620 based on the application performance request 214 (e.g., requested coded BER) and predicted performance at the decoder input 407 (e.g., uncoded BER, $P_u$). Optionally, the performance mapper 410 can also output the control signal 625 for use with a throughput controller, which is described herein in further detail.

*Exemplary Link Adapter*

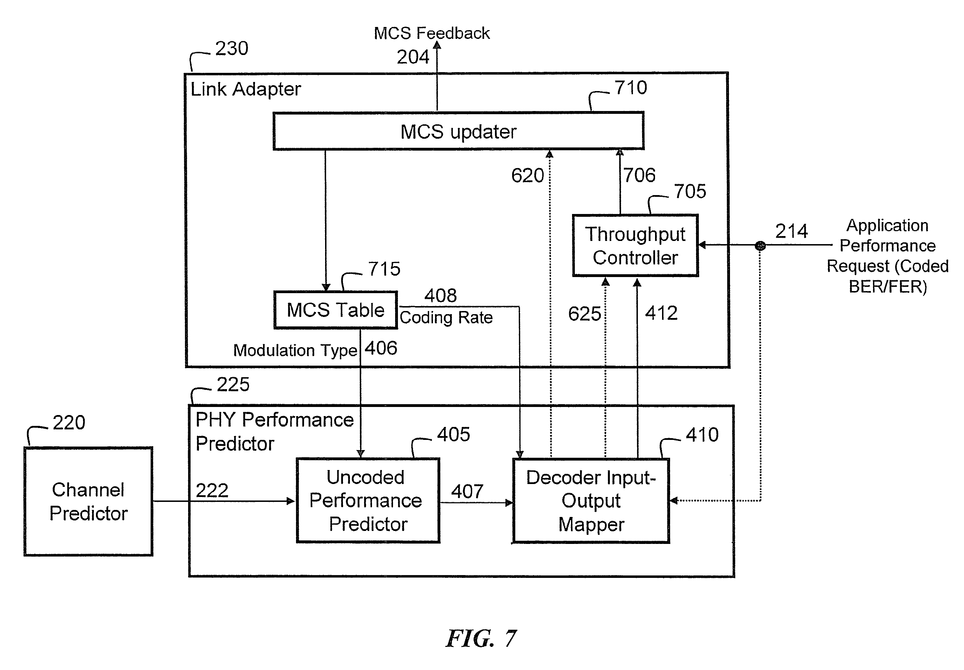

FIG. 7 illustrates a link adapter 230, in accordance with an exemplary embodiment of the present disclosure. In this embodiment, the link adapter 230 can include a throughput controller 705, a MCS updater 710, and a MCS table 715. FIG. 7 illustrates the interaction of the link adapter 230 with the PHY performance predictor 225 in the link adaptation system 215.

Throughput Controller

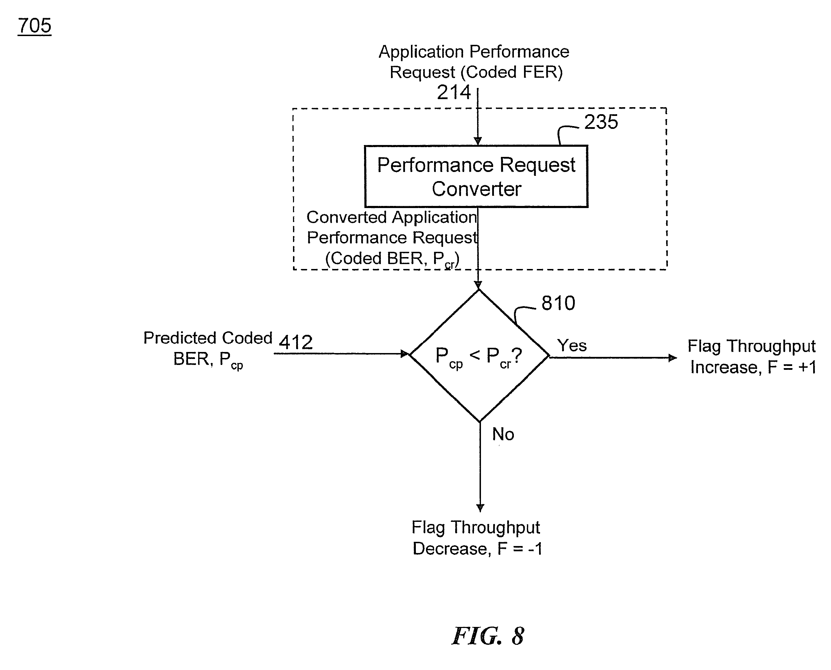

FIG. 8 illustrates the throughput controller 705 in accordance with an exemplary embodiment of the present disclosure. As shown in FIG. 8, the throughput controller 705 can be implemented as a simple comparator 810 that can compare the application performance request 214 (e.g., requested coded BER $P_{cr}$), or the converted application performance request 228, with the predicted performance at the decoder output 412 (e.g., predicted coded BER $P_{cp}$) to determine whether the system 200 can support the application performance request 214 or converted application performance request 228. In another embodiment, the comparator 810 can be configured to compare $\log(P_{cr})$ and $\log(P_{cp})$, which is an equivalent operation. The throughput controller 705 can be configured to output a throughput indicator 706, also referred to herein as a throughput "flag" 706, that can instruct the MCS updater 710 to attempt to increase or decrease throughput.

As shown in FIG. 8, if the comparator 810 determines that the predicted performance at the decoder output 412 ($P_{cp}$) is less than the application performance request 214 ($P_{cr}$), then the throuhout controller 705 can output the throughput flag 706 of $F = +1$, indicating that the MCS updater 710 should attempt to increase throughput. Otherwise, if the comparator 810 determines that the predicted performance at the decoder output 412 ($P_{cp}$) is greater than the application performance request 214 ($P_{cr}$), then the throuhout controller 705 can output the throughput flag 706 of $F = -1$, indicating that the MCS updater 710 should attempt to decrease throughput.

As shown in the embodiment of FIG. 8, if the link adaptation system 215 implements BER as the performance measure and the application performance request 214 ($P_{cr}$) is formatted as MAC FER, then the throughput controller 705 can further employ the optional performance request converter 235, also shown in FIG. 2, to convert the application performance request 214 from the FER format to a BER format, and vice versa.

MCS Updater

As shown in FIG. 7, the MCS updater 710 can operate in conjunction with the uncoded performance predictor 405, the decoder input-output performance mapper 410, and the throughput controller 705 to select the best MCS 204 for the next arriving packet. The MCS updater selects the MCS from the MCS table 715, which includes a plurality of MCS entries. In one embodiment, the MCS entries can be arranged in the MCS table according to increasing or decreasing throughput. For example, the IEEE 802.11(n) standard for WiMax includes such MCS tables 715.

In one embodiment, which corresponds to the first mode of operation of the decoder input-output performance mapper 410, the performance mapper 410 can output the predicted performance 412 at the output of the decoder (e.g., coded BER) to the throughput controller 705. Based on the coded BER 412, the throughput controller 705 can pass the throughput flag 706 to the MCS updater 710 to instruct the MCS updater 710 to shift a pointer from a current entry in the MCS table 715 to a next entry, following a direction of search based on the value of the throughput flag 706. Optionally, a search algorithm can be implemented to determine a step size of the pointer shift, as described in more detail herein. The link adapter 230 can then pass the modulation type 406 corresponding to the selected MCS entry to the uncoded performance predictor 405 so that the uncoded performance predictor 405 can determine the predicted performance at the decoder input 407 (e.g., uncoded BER) for the modulation type 406, given the predicted channel 222 output from the channel predictor 220.

Additionally, the link adapter 230, can pass the coding rate 408 corresponding to the selected MCS entry to the performance mapper 410 so that the performance mapper can update the coded BER 412 based on the uncoded BER 407 output by the uncoded performance predictor 405. In turn, the throughput controller 705 can determine whether to change the throughput in the same direction (e.g., in a direction of increasing or decreasing throughput) based on the coded BER 412 output by the performance mapper 410 and update the throughput flag 706, accordingly. Again, the throughput controller 705 can pass the throughput flag 706 to the MCS updater 710. The MCS updater 710 can then check search stopping criterion, described herein in more detail, to determine if a final decision can be made and, if so, the link adapter 230 can output the MCS feedback 204 that includes the selected MCS to the transmitter PHY 205.

In an alternate embodiment, which corresponds to the second mode of operation of the decoder input-output performance mapper 410, the performance mapper 410 can output the required coding rate 620 to the MCS updater 710. In this embodiment, the MCS updater 710 can immediately shift the pointer to an entry in the MCS table 715 that corresponds to the required coding rate 620 and current modulation type identified by the MCS, such as the MCS 212 of the current received or a subsequently selected MCS. In this mode, at least one of the MCS table entries can be skipped for faster search, or a modulation-first search can be implemented, as described herein.

Search Algorithm Stopping Criteria

When the decoder input-output performance mapper 410 is operating in the first mode of operation, the process described herein in which the MCS updater 710 selects MCS entries from the MCS table 715 in response to the throughput flag 706 can be repeated until one of the following conditions occurs.

If the throughput controller 705 generates a current throughput flag 706 that is opposite the previously generated throughput flag 706, then the MCS updater 710 can stop searching for entries from the MCS table and output the MCS entry at the previous pointer location as the selected MCS in the MCS feedback 204.

Also, if the throughput controller 705 generates a current throughput flag 706 that is the same as the previously generated throughput flag 706 and the pointer reaches the end of the MCS table 715, then the MCS updater 710 can stop searching and output the current MCS as the selected MCS in the MCS feedback 204.

Changing the Number of Spatial Streams

If the throughput controller 705 generates a current throughput flag 706 that is the same as the previously generated throughput flag 706 and the pointer points to an end of a section of the MCS table 715 having MCS entries for the same number of spatial streams, then the MCS updater 710 can determine whether to change the number of spatial streams.

Depending on how the system 200 is implemented, changing the number of spatial streams may not involve changes in the number of active RF chains, and may only require a change in the spatial mapping matrix $H$ of Equation (1) and/or in the stream parser/interleaver.

For example, for high-throughput transmission in accordance with the IEEE 802.11n standard, an equivalent channel vector $\underline{H}$ containing all non-null subcarriers of a spatial stream for a given receive antenna can be expressed as follows:

$$\underline{H} = \boldsymbol{F}\,\underline{h} + \underline{W} \qquad\qquad (15)$$

where $\underline{h}$ is the combined channel impulse response vector from all transmit antennas and can be expressed as follows:

$$\underline{h} = \left[\underline{h}_1^{T}, \cdots, \underline{h}_{N_t}^{T}\right]^{T} \qquad\qquad (16)$$

where $\underline{h}_{n_t}^{T}$ is the channel impulse response vector from the $n_t$-th transmit antenna to the current receive antenna.

Further, the matrix $\boldsymbol{F}=[\boldsymbol{F}^{(1)},\cdots,\boldsymbol{F}^{(Nt)}]$ and the m-th row and the $l$-th column of $\boldsymbol{F}_{m,l}^{(n_t)}$ can be expressed as follows:

$$\boldsymbol{F}_{m,l}^{(n_t)} = e^{-j2\pi m(l+D_k)/N} M_{n_t,k,m} \qquad\qquad (17)$$

where $D_k$ is the value of cyclic delay diversity (CDD) of the $k$-th input stream to the spatial mapper, $N$ is the number of subcarriers, and $M_{nt,k,m}$ is the n-th row, $k$-th column of the spatial mapping matrix for the m-th carrier, as defined by the IEEE 802.11n/D0.01 specification (February 2006).

If the receiver 210 knows the new and old spatial mapping matrices, then the channel predictor 220 can re-compute the effective channel $H$ for the new number of spatial streams. Changing the number of spatial streams can be performed in the transmitter 205 by nulling the corresponding columns of the spatial mapping matrix $\boldsymbol{M}$ and leaving the CDD values for the remaining streams unchanged. Thus, it is apparent from Equations (15) to (17) that the equivalent channel for the remaining streams is unchanged.

Otherwise, to obtain the estimated channel for the reduced number of spatial streams from $\underline{H}$, the channel impulse response vector $\underline{h}$ can be estimated first. Because the channel impulse response vector $\underline{h}$ remains approximately unchanged when decreasing the number of spatial streams, the channel impulse response vector $\underline{h}$ can be multiplied with the new value of the matrix $\boldsymbol{F}$, as defined in Equation (17), to obtain the estimated channel for the reduced number of spatial streams. The estimated channel for the reduced number of spatial streams can then be used for performance prediction by the link adaptation system 215, as described herein.

If the receiver 210 does not have the knowledge of the spatial mapping matrix $\boldsymbol{M}$ and the CDD used in the transmitter 205, then the receiver 210 can not estimate the channel directly when the number of spatial streams is changed. In this embodiment, the receiver 210 can use an intelligent trial and error approach. For example, the pointer may be shifted to an entry in a new section of the MCS table 715 of MCS entries having the different number of spatial streams and having a throughput approximately identical to the throughput of the MCS entry at the previous pointer location (i.e., at the boundary of previous section of the MCS table 715 of MCS entries having the previous number of spatial streams).

Thus, because the performance of the receiver 210 does not change significantly for the same throughput, overall system performance can be sustained. Other approaches can also be implemented, including those described herein with respect to construction of the MCS table 715. Ultimately, the number of spatial streams supported by the system 200 is limited by the minimum number of RF chains (which is no more than the number of antennas) in both the transmitter 205 and the receiver 210.

MCS Table

The MCS table 715 can be implemented using a variety of approaches including, but not limited to, exhaustive search, simplified search, fast search, and modulation-first search approaches.

*Exhaustive MCS Search Approach*

In accordance with the exhaustive search approach, the MCS table 715 can list all supportable MCS entries in a throughput increasing or a throughput decreasing manner. In one embodiment, MCS entries having the same number of spatial streams can be grouped together in the MCS table 715. In an alternate embodiment, MCS entries with the same number of spatial streams are not grouped together in the MCS table 715. In accordance with a direction of search determined by the throughput controller flag 706, the MCS updater 710 can check each available MCS entry until an MCS entry supporting the application performance request with maximum throughput is found.

*Simplified MCS Search Approach*

*A priori* system simulation and performance analysis may indicate that listing all supportable MCS entries in the MCS table 715 may not be necessary, especially those MCS entries having the same throughput. Thus, a simplified MCS table 715 may be implemented in accordance with the simplified search approach.

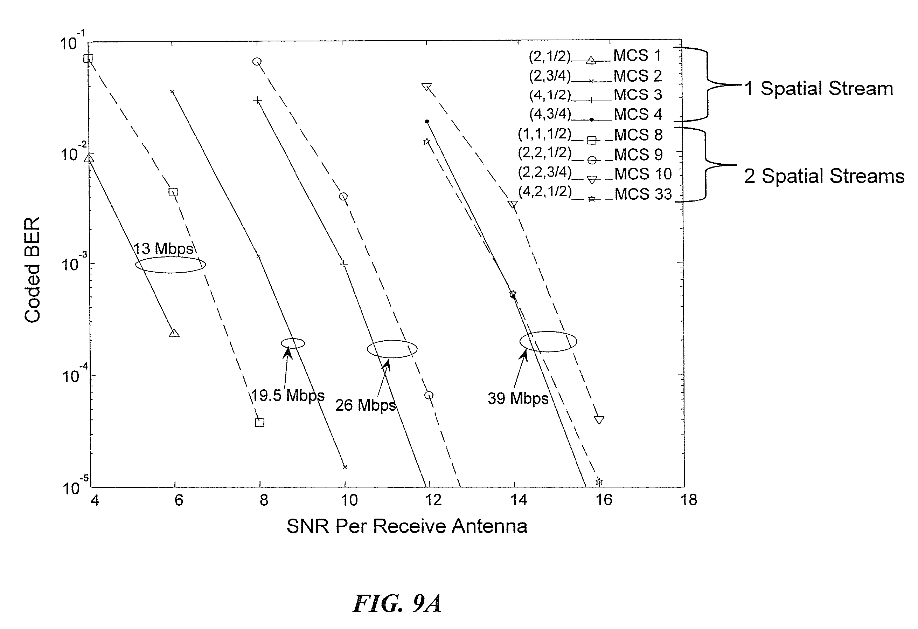

For example, the IEEE 802.11(n)/D0.01 specification (February 2006) provides an MCS table 715 for a system 200 with a maximum of two spatial streams. FIG. 9A illustrates exemplary performance plots of an industry standard (1/2, 7) convolutional coded MIMO multi-carrier system with one and two spatial streams, simulated over the IEEE channel model 'E' with space-time coding and MMSE detection. The notation (1/2, 7) denotes a convolutional code having a code rate of 1/2 and a constraint length of 7. The exemplary performance plots shown in FIG. 9A demonstrate the simplified search approach in accordance with an exemplary embodiment of the present disclosure. The system performances are plotted in FIG. 9A in the low SNR region for different MCS entries defined in IEEE 802.11(n)/D0.01. In this example, each MCS entry (i.e., MCS 1, MCS 2, MCS 3, MCS 4, MCS 8, MCS 9, MCS 10 and MCS 33) is identified by an integer number(s) that denotes the number of bits per symbol corresponding to the digital modulation type at each spatial stream and a fractional number that denotes the coding rate. As shown in FIG. 9A, MCS 8, 9 and 10 with two spatial streams need not be used in practice because the same throughput (13 Mbps, 26 Mbps and 39 Mbps, respectively) may be obtained with one spatial stream (of higher modulation level) and better performance.

Further, in this example, if a switch from one to two spatial streams is desired and if MCS 4 with one spatial stream can support the application performance request, then the receiver 210 can instruct the transmitter 205 to change to MCS 33 with two spatial streams because, as shown in FIG. 9A, MCS 4 and MCS 33 have an identical throughput and approximately the same performance. On the other hand, if the current MCS is 33 and the throughput controller 705 outputs a throughput flag 706 of F = -1 during a throughput decreasing trend, then the MCS updater 710 can select MCS 3 for the next MCS selection.

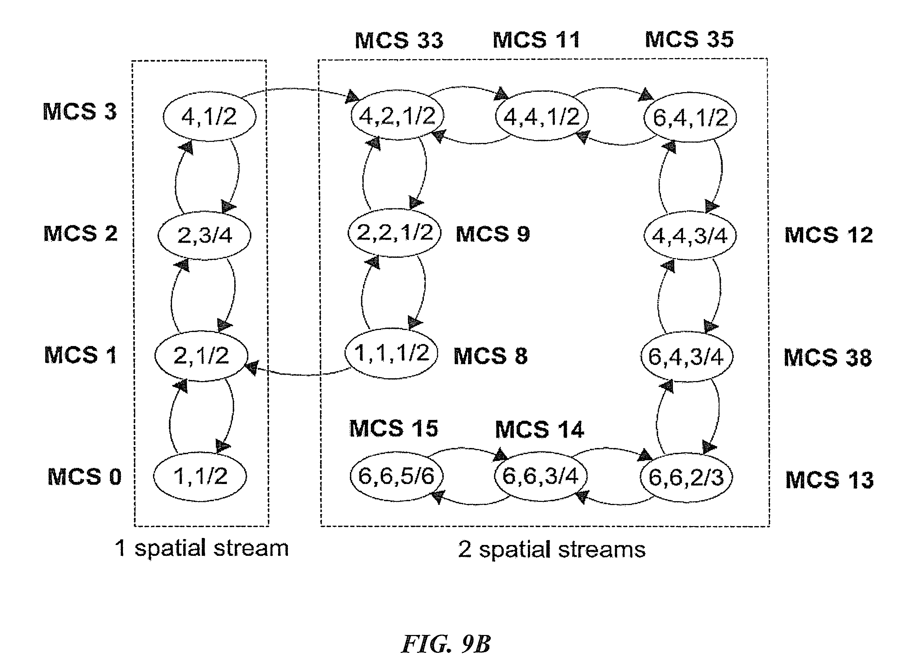

FIG. 9B illustrates an exemplary MCS table 715 for a maximum of two spatial streams, demonstrating the simplified MCS search approach, in accordance with an exemplary embodiment of the present disclosure. In FIG. 9B, each oval represents a state corresponding to an entry in the MCS table 715 and is labeled with a corresponding MCS value according to the IEEE 802.11(n)/D0.01 specification. In this example, the integer number(s) in each oval denotes the number of bits per symbol corresponding to the digital modulation type at each spatial stream, and the fractional number in each oval denotes the coding rate.

*Fast MCS Search Approach*

Further, rather than searching the MCS table 715 one-by-one, as indicated in FIG. 9B, a faster search routine can be implemented, utilizing the second mode of operation of the decoder input-output performance mapper 410. For example, during a throughput increasing trend (i.e., throughput flag 706 of F = +1), for MCS 11 (4, 4, 1/2), instead of moving to MCS 35 (6, 4, 1/2), as shown in FIG. 9B, the decoder input-output performance mapper 410 can directly check whether an exemplary coding rate of 3/4 can be supported with four bits per symbol in both streams.

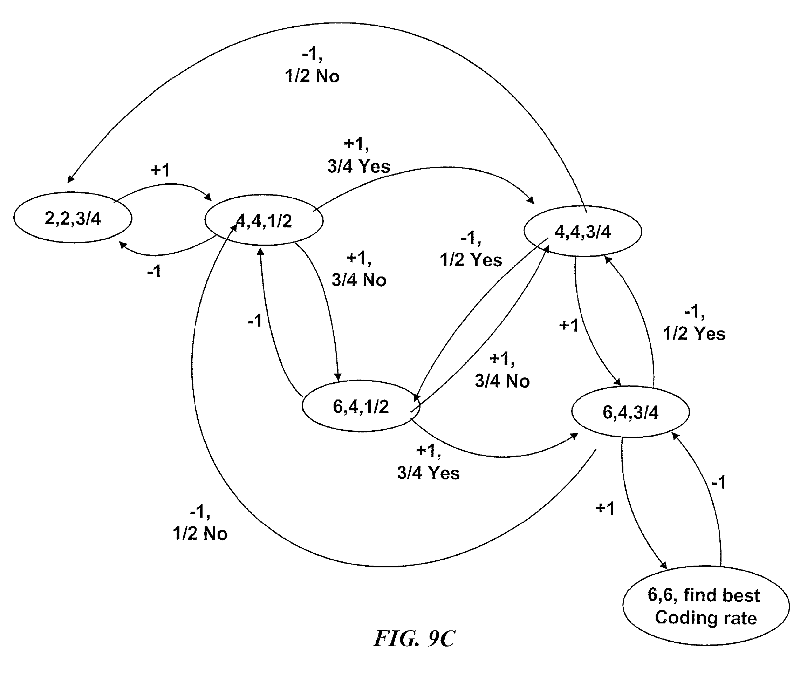

FIG. 9C illustrates a state transition diagram for entries of the simplified MCS table illustrated in FIG. 9B with two spatial streams, demonstrating a fast MCS search approach, in accordance with an exemplary embodiment of the present disclosure. As shown in FIG. 9C, if the exemplary coding rate of 3/4 can be supported, as indicated by the label "+1, 3/4 Yes," then there is no need to check MCS (6, 4, 1/2), and the MCS updater 710 should directly check MCS (6, 4, 3/4) for the next step. Otherwise, as indicated by the label "+1, 3/4 No," the MCS updater 710 can move to MCS (6, 4, 1/2). Similarly, during a decreasing throughput trend (i.e., throughput flag 706 of F = -1) at MCS (4, 4, 3/4), if the exemplary coding rate 1/2 can not be supported, as indicated by the label "-1, 1/2 No" in FIG. 9C, then the MCS updater 710 can select MCS (4, 2, 1/2) for the next step. Otherwise, the MCS updater 710 can move to the next entry in the MCS table, which is MCS (6, 4, 1/2).

*Modulation-First MCS Search Approach*

When each spatial stream has an identical modulation type, a system with a lower modulation level (i.e., fewer bits per symbol) yields better performance and lower throughput than a system with a higher modulation level, if the available coding rates are properly selected, such as those specified in IEEE 802.11a/n. In this case, the MCS updater 710 can first find the best suitable modulation scheme, and then choose an appropriate coding rate, in accordance with

**EP 2 056 509 A2**

a modulation first MCS search approach.

In one embodiment, utilizing the second mode of operation of the input-output performance mapper 704, an effective MCS table (i.e., a subset of the full MCS table 715) can be implemented that only contains MCS entries with different modulation types. In this embodiment, the decoder input-output mapper 704 can receive the application performance request 714 (e.g., requested coded BER), and output the best suitable/required coding rate 620.

In a throughput increasing trend (i.e., throughput flag 706 of F = +1), the MCS updater 710 can terminate search under two conditions. Under the first condition, the performance mapper 410 outputs a required coding rate 620 that has an invalid value, such as zero. In this case, the MCS updater 710 can output the MCS value corresponding to the previous modulation type and the maximum allowable coding rate of that modulation type as the final decision (i.e., as the MCS feedback 204). Under the second condition, the performance mapper 710 outputs to the MCS updater 710 a required coding rate 620 that is valid, in addition to a control signal 625 to the throughout controller 705 so that a throughput flag 706 of F = -1 is generated. In this way, the performance mapper 704 can indicate that the required coding rate 620 is not the highest coding rate that can be supported by the modulation type 406. In a throughput decreasing trend (i.e., throughput flag 706 of F = -1), the MCS updater 710 can terminate search when the input coding rate/required coding rate 620 is invalid or when the general criteria discussed previously are satisfied.

In one embodiment, the MCS updater 710 can implement a modulation-first MCS search approach even if unequal MCS is employed, that is, even if different modulation schemes are applied for different spatial streams of the MIMO channel. However, in this case, the modulation-first approach may not guarantee maximum throughput.

MCS Feedback

The format of the MCS feedback 204 from the receiver 210 to the transmitter 205 can be determined based on the design and specifications of the communications system and protocols. For example, the MCS feedback 204 can be formatted to include an index of the selected MCS defined in accordance with the appropriate communications protocol.

Conclusion

The embodiments of the performance-based link adaptation methods and systems described herein can be readily implemented for multi-carrier systems with and without MIMO transmission, such as WLAN 802.11a/b/g/n and WiMax 802.16. Further, the embodiments of the performance-based link adaptation methods and systems described herein can be readily implemented for SISO, SIMO, and MISO transmission. Moreover, those skilled in the art will understand that the embodiments of the performance-based link adaptation methods and systems described herein can be implemented, with minor modifications, in a multiple carrier wireless communications system in which different carriers support different sets of modulation schemes.

The embodiments of the performance-based link adaptation techniques described herein can provide a more efficient approach than heuristic techniques, a more scalable and more accurate approach than SNR-based techniques, and a more practical and meaningful approach than techniques that only consider uncoded performance, among others.

The present invention has been described with reference to exemplary embodiments. However, it will be apparent to those skilled in the art that it is possible to embody the invention in specific forms other than those described above without departing from the spirit of the invention.

Accordingly, the various embodiments described herein are illustrative, and they should not be considered restrictive in any way. The scope of the invention is given by the appended claims, rather than the preceding description, and all variations and equivalents thereof that fall within the range of the claims are intended to be embraced therein.

**Claims**

**1.** A multiple carrier wireless communications system, comprising:

a channel predictor configured to predict channel state information for a next packet based on channel state information for a current packet;
a performance predictor, comprising:

an uncoded performance predictor configured to predict system performance at an input of a decoder based on a modulation type and the predicted channel state information for the next packet, and
a decoder input-output performance mapper configured to determine a required coding rate based on a requested system performance and the predicted system performance at the input of the decoder; and

a link adapter, comprising:

a modulation and coding scheme (MCS) updater configured to identify a MCS based on the required coding rate.

2. The system of claim 1, wherein the decoder input-output performance mapper is configured to determine the required coding rate that maps a bit-error probability at the input of the decoder to a maximum bit-error probability at an output of the decoder that is less than a requested bit-error probability.

3. The system of claim 2, wherein the decoder input-output performance mapper is further configured to map the bit-error probability at the input of the decoder to the maximum bit-error probability at the output of the decoder using an exponential or polynomial approximation.

4. The system of claim 2, wherein the decoder input-output performance mapper is further configured to map the bit-error probability at the input of the decoder to the maximum bit-error probability at the output of the decoder using a lookup table.

5. The system of claim 1, wherein the MCS updater is configured to identify modulation types from a MCS table of modulation type entries based on the required coding rate, wherein the uncoded performance predictor is configured to predict the system performance at the input of the decoder based on the identified modulation type.

6. The system of claim 5, wherein the MCS updater identifies modulation types from the MCS table while attempting to increase or decrease throughput until the required coding rate has an invalid value, wherein the MCS updater selects a previously identified modulation type and a maximum coding rate supportable by the previously identified modulation type for communications.

7. The system of claim 5, wherein the link adapter further comprises:

a throughput controller, wherein the MCS updater identifies modulation types from the MCS table while attempting to increase throughput until the throughput controller indicates decreasing throughput, wherein the MCS updater selects a previously identified modulation type and a maximum coding rate supportable by the previously identified modulation type for communications.

8. The system of claim 1, wherein carriers in the multiple carrier wireless communications system support different respective modulation types, and wherein the uncoded performance predictor is configured to predict an average uncoded bit error rate (BER) at the decoder input by combining a predicted uncoded BER for each of the carriers.

9. A method for adapting a multiple carrier wireless communications link, comprising:

predicting channel state information for a next packet based on channel state information for a current packet;
predicting system performance at an input of a decoder based on a modulation type and the predicted channel state information for the next packet;
determining a required coding rate based on a requested system performance and the predicted system performance at the input of the decoder; and
identifying a modulation and coding scheme (MCS) based on the required coding rate.

10. The method of claim 9, wherein the step of determining a required coding rate comprises:

selecting a coding rate that maps a bit-error probability at the input of the decoder to a maximum bit-error probability at an output of the decoder that is less than a requested bit-error probability.

11. The method of claim 10, wherein the step of selecting a coding rate comprises:

mapping the bit-error probability at the input of the decoder to the maximum bit-error probability at the output of the decoder using an exponential or polynomial approximation.

12. The method of claim 10, wherein the step of selecting a coding rate comprises:

mapping the bit-error probability at the input of the decoder to the maximum bit-error probability at the output of the decoder using a lookup table.

**13.** The method of claim 9, wherein the step of identifying a MCS comprises:

identifying a modulation type from a MCS table of modulation type entries based on the required coding rate, wherein the step of predicting the system performance at the input of the decoder is based on the identified modulation type.

**14.** The method of claim 13, wherein the step of identifying a MCS further comprises:

repeating the step of identifying a modulation type while attempting to increase or decrease throughput until the required coding rate has an invalid value, wherein a previously identified modulation type and a maximum coding rate supportable by the previously identified modulation type are used for communications.

**15.** The method of claim 13, wherein the step of identifying a MCS further comprises:

repeating the step of identifying a modulation type while attempting to increase throughput until a throughput indicator indicates decreasing throughput upon detecting that the required coding rate is not a maximum supportable coding rate for the identified modulation type, wherein a previously identified modulation type and a maximum coding rate supportable by the previously identified modulation type are used for communications.

FIG. 1A

*FIG. 1B*

**FIG. 1C**

*FIG. 2*

EP 2 056 509 A2

**FIG. 3A**

Receiver PHY — 210

Preamble Processor/ Channel Estimator — 310

305 Current Received Packet

208 Estimated Channel for Current Packet ($H_{current}$)

Channel Predictor — 220

Hold — 315

Stored Previous Channel ($H_{prev}$)

$H_{prev}$ 320

Channel Difference Calculator 325

$$\Delta H = H_{current} - H_{prev}$$

$\Delta H$ 330

335

222 Predicted Channel for Next Packet ($H_{next}$)

EP 2 056 509 A2

FIG. 3B

*FIG. 4*

FIG. 5A

Received MIMO Subcarriers ⌐ 540

MIMO Channels

⌐ 542
$H_N$

⌐ 541    $H_2$
⌐ 535    $H_1$

Spatial data
streams

Detection

Spatial streams of ⌐ 545
modulation symbols

Demodulation/Demapping

⌐ 550
Single stream of
LLR sequence

To Decoder
Input-Output
Performance
Mapper 410

*FIG. 5B*

*FIG. 5C*

EP 2 056 509 A2

*FIG. 6A*

EP 2 056 509 A2

**410** Decoder Input-Output Performance Mapper

Uncoded BER, $P_u$

Current Coding Rate

**407**

**408**

**605**

**610**

$$\log(P_c) = a \cdot \log(P_u) + b$$

**612** (a, b)

(a, b) lookup table

**412**

Predicted Performance at Decoder Output
(Predicted Coded BER, $P_c$)

<u>Mode 1</u>: Log-Linear Approximation

**410** Decoder Input-Output Performance Mapper

Uncoded BER, $P_u$

Requested Coded BER

**407**

**214**

**605**

**610**

$$\log(P_c) = a \cdot \log(P_u) + b$$

**612** (a, b)

(a, b) lookup table

**625**

**620**

Control Signal to
Throughput Controller

Required Coding Rate

<u>Mode 2</u>: Log-Linear Approximation

*FIG. 6B*

**Mode 1**: Lookup Table

**410** — Decoder Input-Output Performance Mapper

Uncoded BER, $P_u$

**407**

**615**

Current Coding Rate **408** → Uncoded BER Lookup Table

**412**

Predicted Performance at Decoder Output
(Predicted Coded BER, Pc)

**Mode 2**: Lookup Table

**410** — Decoder Input-Output Performance Mapper

Uncoded BER, $P_u$

**407**

**615**

Requested Coded BER **214** → Uncoded BER Lookup Table

**625**

Control Signal to Throughput Controller

**620**

Required Coding Rate

*FIG. 6C*

*FIG. 7*

EP 2 056 509 A2

Application Performance
Request (Coded FER)
214

Performance Request
Converter

235

Converted Application
Performance Request
(Coded BER, $P_{cr}$)

Predicted Coded 412
BER, $P_{cp}$

$P_{cp} < P_{cr}$?

810

Yes

Flag Throughput
Increase, F = +1

No

Flag Throughput
Decrease, F = -1

*FIG. 8*

EP 2 056 509 A2

*FIG. 9A*

MCS 35    MCS 11    MCS 33

MCS 12    MCS 38    MCS 13

6,4,1/2 → 4,4,3/4 → 6,4,3/4 → 6,6,2/3

4,4,1/2

4,2,1/2 → 2,2,1/2 → 1,1,1/2

MCS 9    MCS 8

MCS 14    MCS 15

6,6,3/4

6,6,5/6

2 spatial streams

4,1/2 → 2,3/4 → 2,1/2 → 1,1/2

1 spatial stream

MCS 3    MCS 2    MCS 1    MCS 0

*FIG. 9B*

34

*FIG. 9C*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LACAGE et al.** IEEE 802.11 rate adaptation: a practical approach. *MSWiM'04,* October 2004
- **BRASWELL et al.** Modeling data rate agility in the IEEE 802.11 a WLAN protocol. *OPNETWORK'01,* March 2001
- **HARATCHEREV et al.** Hybrid rate control for IEEE 802.11. *MobiWac'04*
- **SCHENK et al.** Throughput of a MIMO-OFDM based WLAN systems. *SCVT2004,* November 2004
- **XIA et al.** Adaptive MIMO-OFDM based on partial channel state information. *IEEE Trans. Signal Processing,* January 2004, vol. 25 (1), 202-213
- **HERMOSILLA et al.** Adaptive modulation and coding for turbo receivers in space-time BICM. *IEEE WCNC 2006,* April 2006, 1293-1298
- **ALAMOUTI et al.** Adaptive trellis-coded multiple-phase-shift keying for Rayleigh fading channels. *IEEE Transactions on Communications,* June 1994, vol. 42 (6), 2305-2314